(19) Europäisches Patentamt
European Patent Office
Office européen des brevets

(11) **EP 3 862 149 B1**

(12) **EUROPEAN PATENT SPECIFICATION**

(45) Date of publication and mention
of the grant of the patent:
**04.12.2024 Bulletin 2024/49**

(21) Application number: **19869778.1**

(22) Date of filing: **27.09.2019**

(51) International Patent Classification (IPC):
*B25J 13/00* (2006.01)     *G05B 19/02* (2006.01)
*B25J 9/16* (2006.01)       *G05D 1/00* (2024.01)
*B25J 5/00* (2006.01)       *G05B 19/042* (2006.01)

(52) Cooperative Patent Classification (CPC):
**G05D 1/0238; B25J 9/162; B25J 9/1651;
G05B 19/0426; G05D 1/0274; G05D 1/0891;**
G05B 2219/50393

(86) International application number:
**PCT/JP2019/038417**

(87) International publication number:
**WO 2020/071296 (09.04.2020 Gazette 2020/15)**

(54) **CONTROL DEVICE, CONTROL METHOD, AND PROGRAM**

STEUERUNGSVORRICHTUNG, STEUERUNGSVERFAHREN UND PROGRAMM

DISPOSITIF DE COMMANDE, PROCÉDÉ DE COMMANDE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2018   JP 2018190329**

(43) Date of publication of application:
**11.08.2021 Bulletin 2021/32**

(73) Proprietor: **Sony Group Corporation
Tokyo 108-0075 (JP)**

(72) Inventor: **INAMOTO, Shinji
Tokyo 108-0075 (JP)**

(74) Representative: **D Young & Co LLP
3 Noble Street
London EC2V 7BQ (GB)**

(56) References cited:
WO-A1-2017/188130     JP-A- 2003 089 335
JP-A- 2011 005 608      JP-A- 2011 178 375
JP-A- 2012 162 195      JP-A- 2012 162 195
JP-A- 2014 060 373      JP-A- 2015 196 600
JP-A- H0 315 409        KR-A- 20180 042 975
KR-A- 20180 079 692

• GRAF R ET AL: "Active acceleration
compensation using a Stewart-platform on a
mobile robot", ADVANCED MOBILE ROBOTS,
1997. PROCEEDINGS., SECOND EUROMICRO
WORKSHOP ON BRESCIA, ITALY 22-24 OCT.
1997, LOS ALAMITOS, CA, USA,IEEE COMPUT.
SOC, US, 22 October 1997 (1997-10-22), pages 59
-64, XP010255389, ISBN: 978-0-8186-8174-5, DOI:
10.1109/EURBOT.1997.633569

**Description**

Field

The technology of the disclosure relates to a control device, a control method, and a computer program.

Background

In recent years, for example, a technology of transporting various transportation targets such as luggage by a robot has been studied. An example of a transportation target at a restaurant includes eatables and drinkables such as food and drinks provided at the restaurant.

Citation List

Patent Literature

> Patent Literature 1: Japanese Laid-open Patent Publication No. 2016-034685
> Patent Literature 2: Japanese Laid-open Patent Publication No. 2005-001055
> Patent Literature 3: Japanese Laid-open Patent Publication No. 2007-195750

Document GRAF R ET AL: "Active acceleration compensation using a Stewart-platform on a mobile robot". ADVANCED MOBILE ROBOTS, 1997, PROCEEDINGS, SECOND EUROMICRO WORKSHOP ON BRESCIA, ITALY 22-24 OCT. 1997, LOS ALAMITOS, CA, USA, IEEE COMPUT. SOC, US, 22 October 1997 (1997-10-22), pages 59-64, XP010255389. DOI: 10.1109/EURBOT.1997.633569, ISBN: 978-0-8186-8174-5, relates to a situation in which an object is transported on a mobile platform and all accelerations of the mobile platform affect the object. Stewart-platforms are mostly used for simulation, where the platform generates accelerations that increase the simulation's quality. Vice versa, it's possible to use a Stewart-platform mounted on a mobile platform to compensate unwanted accelerations in the way that the Stewart-platform generates an anti-acceleration. The necessary movement of the platform is calculated by a washout-filter. Applications of this combination are either the transport of liquids in open boxes or medical transports, where the patients must not be affected by any acceleration.

Document JP 2012 162195 A discloses an orbit system traffic vehicle comprising tilt actuators which are arranged at the front and rear of the vehicle and incline a vehicle body by displacing it in the vertical direction, and a tilt actuator controller which controls a drive amount of the tilt actuator. The tilt actuator controller acquires an inclination angle in the traveling direction of the vehicle body which can cancel acceleration in a fore- and-aft direction parallel with a floor face of the vehicle body acting on a passenger. Then, the tilt actuator controller acquires the drive amount of the tilt actuator which can obtain the inclination angle, and outputs a drive command which sets the drive amount as a target drive amount to the tilt actuator.

Summary

Technical Problem

When a transportation target is delicately presented food or a drink that easily tips over, for example, the food may collapse, or the drink may spill due to acceleration or deceleration that occurs during transportation.

The technology of the disclosure has been made to solve the problem described above, and an object of the disclosed technology is to safely transport a transportation target.

Solution to Problem

The invention is defined in the independent claims. Optional embodiments of the invention are described in the dependent claims.

According to an aspect of the disclosure, a control device that controls movement of a transporting unit connected to a moving unit that is movable comprises a first control unit that controls a movement speed of the moving unit; and a second control unit that moves the transporting unit with respect to the moving unit according to acceleration or deceleration of the moving unit.

# EP 3 862 149 B1

Advantageous Effects of Invention

According to the aspect of the disclosure, it is possible to safely transport a transportation target.

Brief Description of Drawings

FIG. 1 is a diagram illustrating a configuration example of a transport robot of a first embodiment.
FIG. 2 is a diagram illustrating a configuration example of a control device of the first embodiment.
FIG. 3 is a diagram provided for explaining an operation example of the transport robot of the first embodiment.
FIG. 4 is a diagram provided for explaining an operation example of the transport robot of the first embodiment.
FIG. 5 is a diagram provided for explaining an operation example of the transport robot of the first embodiment.
FIG. 6 is a diagram provided for explaining an operation example of the transport robot of the first embodiment.
FIG. 7 is a diagram provided for explaining an operation example of the transport robot of the first embodiment.
FIG. 8 is a diagram provided for explaining an operation example of the transport robot of the first embodiment.
FIG. 9 is a diagram provided for explaining an operation example of the transport robot of the first embodiment.
FIG. 10 is a diagram provided for explaining an operation example of the transport robot of a second embodiment.
FIG. 11 is a diagram provided for explaining an operation example of the transport robot of a third embodiment.
FIG. 12 is a diagram provided for explaining an operation example of the transport robot of the third embodiment.
FIG. 13 is a diagram illustrating a configuration example of a transport robot of a fourth embodiment. Description of Embodiments

Hereinafter, embodiments of a control device, a control method, and a computer program disclosed in the present specification will be described with reference to the drawings. Note that the control device, the control method, and the computer program disclosed in the present specification are not limited by these embodiments. Furthermore, in the embodiments, the same reference numerals are given to configurations having the same functions.
Furthermore, the technology of the disclosure will be described according to the order of items illustrated below.

First embodiment

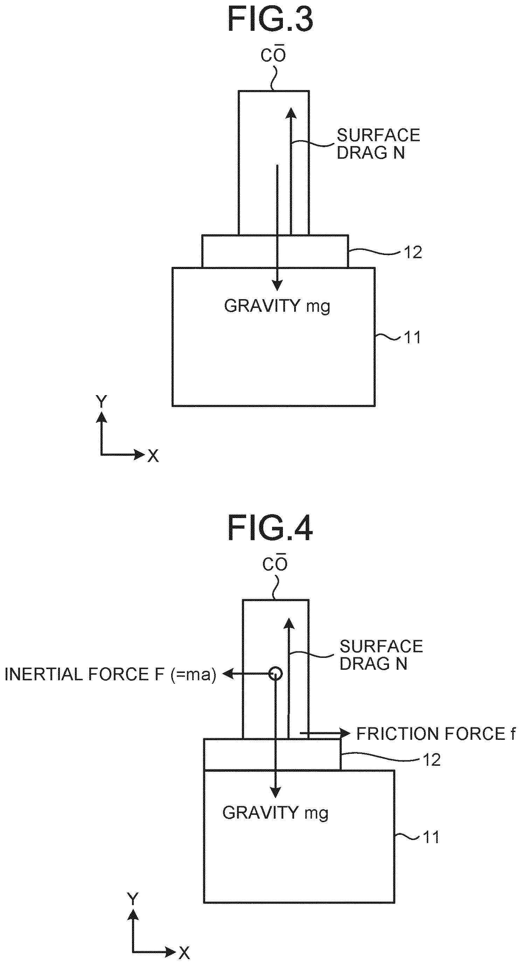

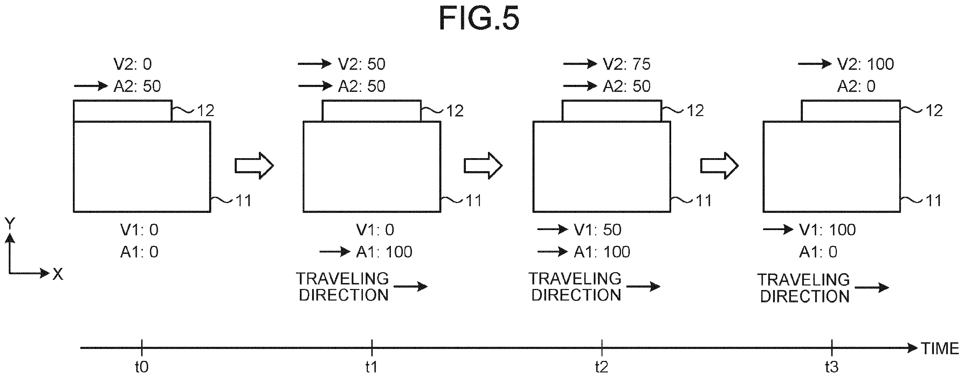

Configuration of transport robot
Configuration of control device
Judgment of characteristics of transportation target
Determination of mounting table acceleration upper limit value and mounting table speed upper limit value
Operation of transport robot
Relation of force applied to transportation target (FIGS. 3 and 4)
Countermeasure 1 (FIGS. 5 to 7)

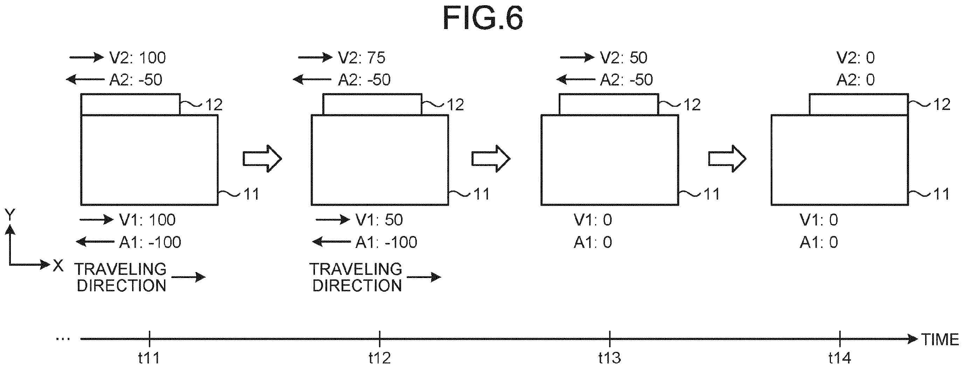

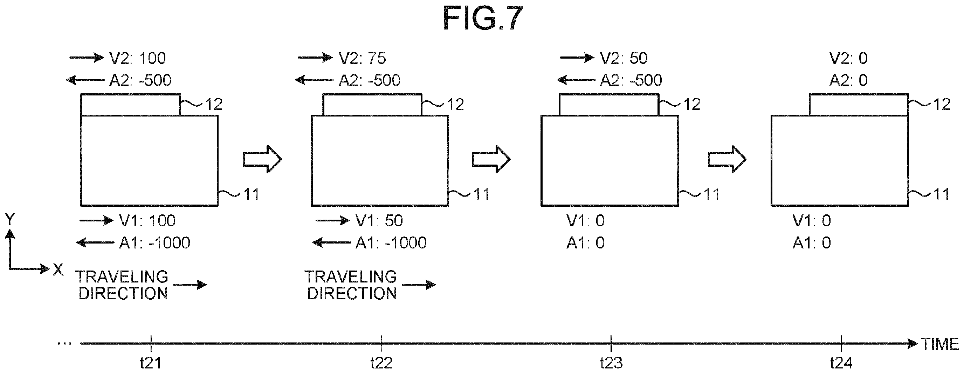

Countermeasure 1-1 (FIG. 5)
Countermeasure 1-2 (FIG. 6)
Countermeasure 1-3 (FIG. 7)

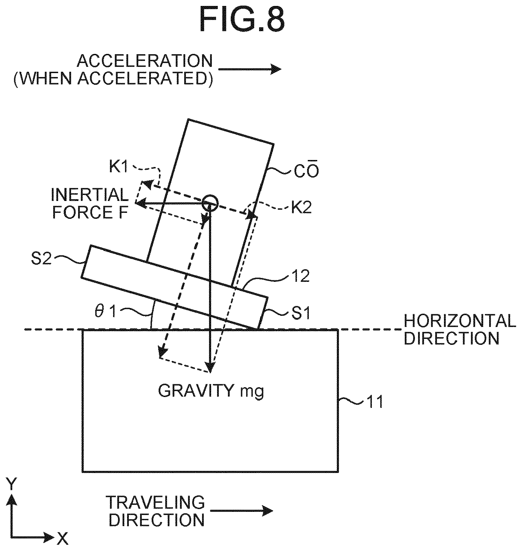

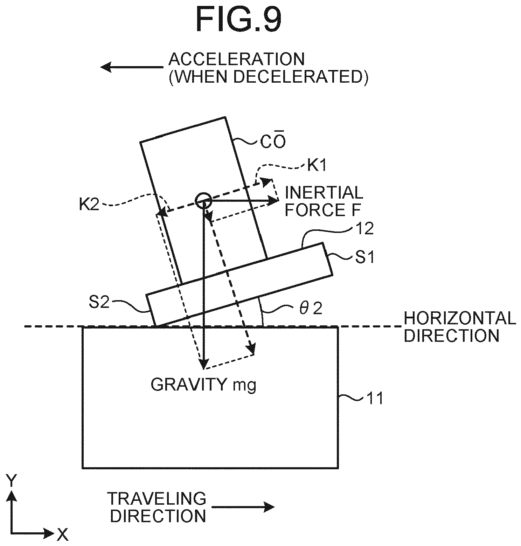

Countermeasure 2 (FIGS. 8 and 9)
Countermeasure 3

Second embodiment
Operation of transport robot
Third embodiment
Operation of transport robot
Fourth embodiment
Configuration of transport robot
Fifth embodiment
Operation of transport robot
Effect of technology of disclosure

First embodiment

Configuration of transport robot

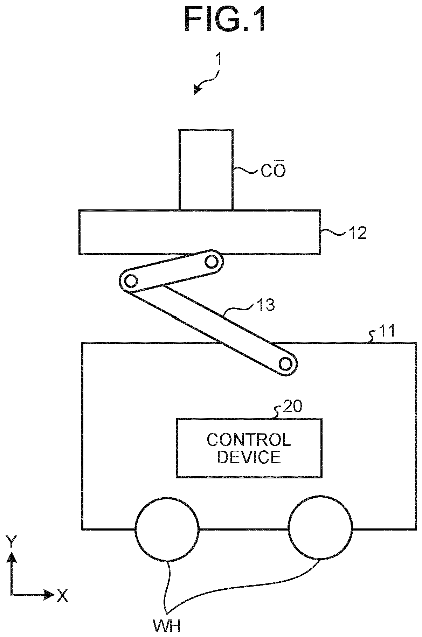

FIG. 1 is a diagram illustrating a configuration example of a transport robot of the first embodiment. In FIG. 1, a transport robot 1 has a chassis 11, a mounting table 12, a connecting arm 13, and a control device 20. The chassis 11 is a moving unit that moves the transport robot 1 along a floor surface, for example, and has a traveling mechanism such as wheels WH and caterpillars as a movement means thereof. However, instead of the traveling mechanism by the chassis 11, various movable configurations, such as a walking mechanism composed of two or more legs and a spherical movement mechanism that rotates and moves by itself, can also be used as the moving unit of the transport robot 1.

The control device 20 is provided in the chassis 11, for example. Since the chassis 11 and the mounting table 12 are connected by the connecting arm 13 that is bendable and extendable, the chassis 11 and the mounting table 12 can operate independently of each other. A transportation target CO is placed on an upper surface of the mounting table 12. An example of the transportation target CO includes eatables and drinkables such as food and drink provided at a restaurant. For example, food is placed on the mounting table 12 while being served on a plate and the drink is placed on the mounting table 12 while being poured into a cup. The transportation target CO placed on the mounting table 12 connected to the chassis 11 via the connecting arm 13 is transported as the chassis 11 moves while being placed on the mounting table 12. The mounting table 12 is an example of a "transporting unit" that comes into contact with the transportation target CO and transports the transportation target CO.

Configuration of control device

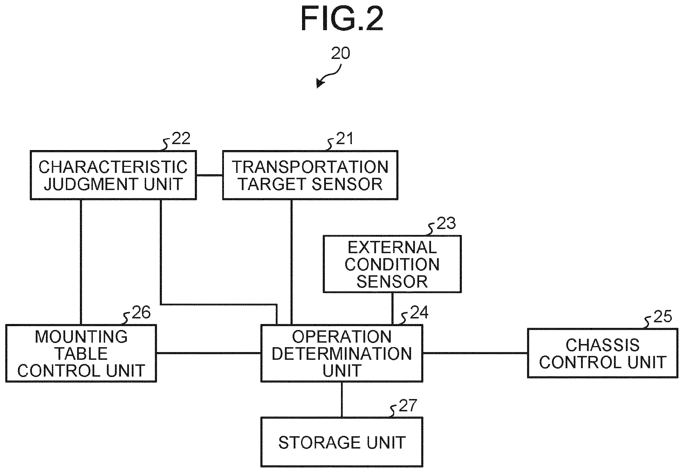

FIG. 2 is a diagram illustrating a configuration example of the control device of the first embodiment. In FIG. 2, the control device 20 has a transportation target sensor 21, a characteristic judgment unit 22, an external condition sensor 23, an operation determination unit 24, a chassis control unit 25, a mounting table control unit 26, and a storage unit 27.

The characteristic judgment unit 22, the operation determination unit 24, the chassis control unit 25, and the mounting table control unit 26 are implemented by a processor, for example. An example of the processor includes a central processing unit (CPU), a digital signal processor (DSP), a field programmable gate array (FPGA), and the like. Furthermore, the characteristic judgment unit 22, the operation determination unit 24, the chassis control unit 25, and the mounting table control unit 26 may also be implemented by a large scale integrated circuit (LSI) including the processor and peripheral circuits. Moreover, the characteristic judgment unit 22, the operation determination unit 24, the chassis control unit 25, and the mounting table control unit 26 may also be implemented using an application specific integrated circuit (ASIC), and the like.

The storage unit 27 is implemented by a memory, for example. An example of the memory includes a random access memory (RAM) such as a synchronous dynamic random access memory (SDRAM), a read only memory (ROM), a flash memory, and the like.

Furthermore, all or some of respective processes in the following description in the characteristic judgment unit 22, the operation determination unit 24, the chassis control unit 25, and the mounting table control unit 26 may also be implemented by causing a processor included in the control device 20 to execute a computer program corresponding to each process. For example, the computer program corresponding to each process in the following description may be stored in the memory, read from the memory by the processor, and executed. Furthermore, the computer program may be stored in a program server connected to the control device 20 via an arbitrary network, downloaded from the program server to the control device 20, and executed. Alternatively, the computer program may be stored in a recording medium readable by the control device 20, read from the recording medium, and executed. The recording medium readable by the control device 20 includes, for example, a portable storage medium such as a memory card, a USB memory, an SD card, a flexible disk, a magneto-optical disk, a CD-ROM, a DVD, and a Blu-ray (registered trademark) disk. Furthermore, the computer program is a data processing method described in a discretionary language or a discretionary description method, and may be in any format such as source codes and binary codes. Furthermore, the computer program is not necessarily limited to a single program, and includes a computer program distributed as a plurality of modules or a plurality of libraries, or a computer program that performs its function in cooperation with a separate computer program represented by an OS.

The transportation target sensor 21 is installed, for example, on the upper surface side of the mounting table 12. The transportation target sensor 21 has, for example, a camera, a depth sensor, and a temperature sensor, acquires an image, depth information, and temperature information of the transportation target CO placed on the mounting table 12, and outputs the acquisition result to the characteristic judgment unit 22 and the operation determination unit 24.

The external condition sensor 23 is installed, for example, on the front surface side of the chassis 11 in the traveling direction. The external condition sensor 23 has, for example, a camera and a depth sensor, detects an obstacle existing on the movement path of the transport robot 1, and outputs the detection result to the operation determination unit 24.

The characteristic judgment unit 22 judges the characteristics of the transportation target CO placed on the mounting table 12 on the basis of the acquisition result (that is, the image, the depth information, and the temperature information of the transportation target CO) input from the transportation target sensor 21, and outputs the judgment result to the operation determination unit 24.

In the storage unit 27, information on a map of the movement range of the transport robot 1 and information on a destination of the transport robot 1 within the movement range are preset and stored.

The operation determination unit 24 determines the movement path of the transport robot 1 (that is, the movement path of the chassis 11) (hereinafter, may be simply referred to as a "movement path") on the basis of the information on the map and the information on the destination, which are stored in the storage unit 27. Furthermore, on the basis of the judgment result input from the characteristic judgment unit 22 (that is, the characteristics of the transportation target CO), the operation determination unit 24 determines an upper limit value (hereinafter, may be simply referred to as a "mounting table acceleration upper limit value") of the acceleration of the mounting table 12 (hereinafter, may be simply referred to as a "mounting table acceleration"). Furthermore, on the basis of the judgment result input from the characteristic judgment unit 22, the operation determination unit 24 determines an upper limit value (hereinafter, may be simply referred to as a "mounting table speed upper limit value") of the movement speed of the mounting table 12 (hereinafter, may be simply referred to as a "mounting table speed"). Furthermore, the operation determination unit 24 determines where and how the chassis 11 and the mounting table 12 are accelerated or decelerated on the movement path thereof so as not to exceed the mounting table acceleration upper limit value and the mounting table speed upper limit value. That is, on the basis of the characteristics of the transportation target CO, the operation determination unit 24 determines the movement speed or acceleration of the chassis 11 on the movement path of the chassis 11 before the chassis 11 starts moving, and outputs the determination result to the chassis control unit 25. Furthermore, on the basis of the judgment result input from the characteristic judgment unit 22 (that is, the characteristics of the transportation target CO), the operation determination unit 24 determines where and how the mounting table 12 is controlled on the movement path before the chassis 11 starts moving, and outputs the determination result to the mounting table control unit 26. By so doing, the operation determination unit 24 determines the operations of the chassis 11 and the mounting table 12 before the chassis 11 starts moving.

In this way, on the basis of the characteristics of the transportation target CO, the operation determination unit 24 determines the movement speeds or accelerations of the chassis 11 and the mounting table 12 on the movement path before the chassis 11 starts moving.

Note that the operation determination unit 24 may acquire information from the transportation target sensor 21 and the external condition sensor 23 at any time even during the movement of the chassis 11, and determine the operations of the chassis 11 and the mounting table 12 according to the condition of the transportation target CO, the condition of obstacles on the movement path thereof, and the like.

Furthermore, since the magnitude of the vibration of the transport robot 1 during traveling depends on a traveling location and a speed, the relation between the vibration and the speed may be obtained on the basis of traveling information on pre-traveling or during the past transportation, and the mounting table speed upper limit value may be obtained from allowable vibration.

The chassis control unit 25 controls a driving device of the chassis 11 such as a motor (not illustrated) and wheels WH according to the determination result of the operation determination unit 24, and moves the chassis 11.

The mounting table control unit 26 controls the operation of the mounting table 12 by controlling the operation of the connecting arm 13 according to the determination result of the operation determination unit 24 during the movement of the transport robot 1, and moves the mounting table 12 three-dimensionally in front, back, left, right, up, and down.

Note that the mounting table control unit 26 may move the mounting table 12 according to an instruction from the characteristic judgment unit 22 when the characteristic judgment unit 22 judges the characteristics of the transportation target CO.

The control device 20 controls the movement of the mounting table 12 connected to the movable chassis 11 by adopting the above configuration.

Judgment of characteristics of transportation target

For example, the characteristic judgment unit 22 instructs the mounting table control unit 26 to temporarily vibrate the mounting table 12 before the chassis 11 starts moving, and then judges the following characteristics of the transportation target CO on the basis of the image, the depth information, and the temperature information of the transportation target CO acquired by the transportation target sensor 21.

For example, the characteristic judgment unit 22 judges, as the characteristics of the transportation target CO, whether the transportation target CO has fluidity such as a source, that is, whether the transportation target CO continues to shake during the movement of the transport robot 1.

Furthermore, for example, when the transportation target CO is a liquid, the characteristic judgment unit 22 judges the difference in height between a liquid level and a vessel, the viscosity of the liquid, and the like as the characteristics of the transportation target CO.

Furthermore, for example, when the transportation target CO is food, the characteristic judgment unit 22 judges susceptibility to collapse of the arrangement of the food from the form (height and shape) of the arrangement of the food as the characteristics of the transportation target CO. For example, when the form of the arrangement of the food is a thin flat shape or is flocculent, the characteristic judgment unit 22 judges that the arrangement of the food is likely to collapse due to the influence of wind caused by the movement of the transport robot 1.

Furthermore, for example, the characteristic judgment unit 22 judges whether the arrangement of the food has a certain regularity, as the characteristics of the transportation target CO.

Furthermore, for example, the characteristic judgment unit 22 judges whether the transportation target CO has a high temperature, as the characteristics of the transportation target CO.

Note that in order to judge the characteristics of the transportation target CO in more detail, the characteristic judgment unit 22 may apply a load to the transportation target CO before the chassis 11 starts moving, and judge the susceptibility to collapse of the arrangement of the food from the difference between the images of the transportation target CO acquired by the transportation target sensor 21 before and after the load is applied (that is, the difference between the image before the load is applied and the image after the load is applied). The load applied to the transportation target CO by the control of the mounting table control unit 26 with respect to the mounting table 12 according to an instruction from the characteristic judgment unit 22 includes, for example, at least one of acceleration, deceleration, and vibration of the transportation target CO. However, when the load is applied to the transportation target CO, the load is gradually increased starting from a minimum load, thereby preventing the transportation target CO from tipping over and the arrangement of the food from collapsing. For example, it is preferable to minimize a load when transporting the transportation target CO while minimizing the load on the transportation target CO. Furthermore, how much the load on the transportation target CO is increased may be set in advance, or may be determined on the basis of information acquired by the transportation target sensor 21.

Furthermore, it may be possible to adopt a configuration in which a fan that sends wind to the transportation target CO placed on the mounting table 12 is provided, a load due to the wind is applied to the transportation target CO before the chassis 11 starts moving, and the susceptibility to collapse of the arrangement of the food is determined from the difference between images before and after the load is applied.

In this way, the characteristic judgment unit 22 judges the characteristics of the transportation target CO by applying a load to the transportation target CO before the chassis 11 starts moving.

Note that the judgment of the characteristics of the transportation target CO may be used in the following judgment regarding whether the transportation target CO can be transported at a specified speed, acceleration, and time before the transportation target CO is started to be transported. For example, when the transportation target CO is food, if it is known that the arrangement of the food will collapse before the food is started to be transported, it is possible to take measures such as changing the arrangement of the food when it is known.

Determination of mounting table acceleration upper limit value and mounting table speed upper limit value

The operation determination unit 24 determines the mounting table acceleration upper limit value and the mounting table speed upper limit value, for example, as follows, on the basis of the characteristics of the transportation target CO.

For example, the operation determination unit 24 determines the mounting table acceleration upper limit value to be a smaller value as the difference in height between a liquid level and a vessel becomes smaller.

Furthermore, for example, the operation determination unit 24 determines the mounting table acceleration upper limit value to be a smaller value as the viscosity of a liquid becomes smaller.

Furthermore, for example, since the arrangement of food more easily collapses as the height of the arrangement is higher, the operation determination unit 24 determines the mounting table acceleration upper limit value to be a smaller value as the height of the arrangement of the food becomes higher.

Furthermore, for example, when the form of the arrangement of the food is a thin flat shape or is flocculent, since the arrangement of the food is likely to collapse due to the influence of wind, the operation determination unit 24 determines the mounting table speed upper limit value to a value smaller than a threshold value.

Furthermore, for example, when the arrangement of the food has a certain regularity, since a slight collapse of the arrangement of the food may lead to a complaint from a customer, the operation determination unit 24 determines the mounting table acceleration upper limit value to a value smaller than the threshold value.

Furthermore, for example, when the transportation target CO has fluidity, the operation determination unit 24 determines the mounting table acceleration upper limit value to a value smaller than the threshold value.

Furthermore, for example, when the transportation target CO has a high temperature, since the damage at the time of accident becomes large, the operation determination unit 24 determines both the mounting table acceleration upper limit value and the mounting table speed upper limit value to values smaller than the threshold value.

Operation of transport robot

FIG. 3 to FIG. 10 are diagrams provided for explaining operation examples of the transport robot of the first embodiment. As described above, in the transport robot 1, the operation of the mounting table 12 is controlled by controlling the operation of the connecting arm 13 by the mounting table control unit 26. However, in the description of the operation examples using FIG. 3 to FIG. 12, the operation examples of the mounting table 12 will be described by omitting the description of the connecting arm 13 in order to avoid complicated description.

Relation of force applied to transportation target (FIGS. 3 and 4)

As illustrated in FIG. 3, when the transportation target CO is in a stationary state, since gravity mg and surface drag N from the mounting table 12 are applied to the transportation target CO having a mass of m, "N=mg" is obtained.

On the other hand, as illustrated in FIG. 4, in a state in which the transportation target CO is accelerated at an acceleration a and the transportation target CO is not shifted from the mounting table 12, the gravity mg, the surface drag N from the mounting table 12, friction force f from the mounting table 12, and inertial force F (=ma) are applied to the transportation target CO when viewed from an inertial form (stationary system). At this time, since the inertial force F is applied to the transportation target CO in a lateral direction ($\pm$X direction), the transportation target CO may be shifted from the mounting table 12 or the transportation target CO may tip over. Furthermore, sine the inertial force F is a load in a direction different from the gravity mg constantly applied to the transportation target CO, when the transportation target CO is food, the inertial force F becomes a factor that collapses the arrangement of the food.

In this regard, in the present embodiment, the lateral load applied to the transportation target CO is reduced, preferably 0 (zero), by taking the following countermeasures 1 to 3.

Note that, in the following, the unit of speed is set to [cm/s] and the unit of acceleration is set to [$cm/s^2$].

Countermeasure 1 (FIGS. 5 to 7)

The inertial force applied to the transportation target CO is proportional to the acceleration of the transportation target CO. Therefore, in the countermeasure 1, in order to reduce an absolute value of the acceleration of the transportation target CO, the mounting table control unit 26 moves the mounting table 12, which can operate independently of the chassis 11, with respect to the chassis 11, whose operation is controlled by the chassis control unit 25, as follows. Hereinafter, the countermeasure 1 will be described by dividing it into countermeasures 1-1, 1-2, and 1-3 (FIGS. 5, 6, and 7). Hereinafter, the acceleration of the chassis 11 may be referred to as "chassis acceleration" and the speed of the chassis 11 may be referred to as "chassis speed".

Countermeasure 1-1 (FIG. 5)

For example, as illustrated in FIG. 5, it is assumed that the chassis 11, which is in a stationary state at a chassis speed V1=0 at times t0 and t1, starts accelerating at a chassis acceleration A1=100 at the time t1 toward the traveling direction, continues to accelerate while keeping the chassis acceleration A1 constant at A1=100 at time t2, and finishes the acceleration at time t3 and reaches a constant chassis speed V1=100. Here, for example, it is assumed that the time t1 is 1 second after the time t0, the time t2 is 1.5 seconds after the time t0, and the time t3 is 2 seconds after the time t0. Thus, the chassis speed V1 is V1=50 at the time t2 and V1=100 at the time t3.

With respect to the chassis 11 that accelerates toward the traveling direction in this way, the mounting table control unit 26 starts accelerating the mounting table 12 at a mounting table acceleration A2=50 toward the traveling direction of the chassis 11 at the time t0. Furthermore, the mounting table control unit 26 continuously accelerates the mounting table 12 while keeping the mounting table acceleration A2 constant at A2=50 at the times t1 and t2, and finishes accelerating the mounting table 12 at the time t3. Thus, a mounting table speed V2 is V2=50 at the time t1, V2=75 at the time t2, and V2=100 at the time t3. Thus, at the time t3, the mounting table 12 is in a stopped state with respect to the chassis 11.

In this way, when the chassis 11 accelerates from the stopped state toward the traveling direction, the mounting table control unit 26 accelerates the mounting table 12 to a predetermined speed (for example, V2=50 at the time t1) and then the chassis control unit 25 starts accelerating the chassis 11. Furthermore, at the time when the acceleration of the chassis 11 is finished (for example, at the time t3), the mounting table control unit 26 controls the mounting table speed V2 to be the same as the chassis speed V1 (for example, V2=V1=100). With this, a load applied to the transportation target CO placed on the mounting table 12 can be suppressed to a load with an acceleration of 50.

The countermeasure 1-1 is particularly useful, for example, when it takes time to start movement or change direction of the chassis 11 due to design of the driving system of the chassis 11, or when notifying the surroundings by light or sound that the chassis 11 is to start moving, in consideration of safety, before the chassis 11 starts moving.

Countermeasure 1-2 (FIG. 6)

For example, as illustrated in FIG. 6, it is assumed that the chassis 11, which is moving toward the traveling direction at the chassis speed V1=100, starts decelerating at a chassis acceleration A1=-100 at time t11, continues to decelerate while keeping the chassis acceleration A1 constant at A1=-100 at time t12, and stops at time t13. Here, for example, it is assumed that the time t12 is 0.5 seconds after the time t11, the time t13 is 1 seconds after the time t11, and time t14 is 2 seconds after the time t11. Thus, the chassis speed V1 is V1=50 at the time t12 and V1=0 at the time t13.

With respect to the chassis 11 that decelerates toward the traveling direction in this way, the mounting table control unit 26 starts decelerating the mounting table 12, which is moving toward the traveling direction at the mounting table speed V2=100 (that is, the same speed as the chassis speed V1=100) at a mounting table acceleration A2=-50 at the time t11, and continuously decelerates the mounting table 12 while keeping the mounting table acceleration A2 constant at A2=-50 at the times t12 and t13. Thus, the mounting table speed V2 is V2=75 at the time t12, V2=50 at the time t13, and V2=0 at the time t14. Thus, at the time t14, the mounting table 12 is in a stopped state with respect to the chassis 11.

Here, for example, when the positional relation between the mounting table 12 and the chassis 11 is fixed in FIG. 6 (that is, when the mounting table 12 moves in the same manner as the chassis 11), a load with an acceleration of -100 is applied to the transportation target CO placed on the mounting table 12.

On the other hand, by changing the positional relation between the mounting table 12 and the chassis 11 as illustrated in FIG. 6, a load applied to the transportation target CO placed on the mounting table 12 can be suppressed to a load with an acceleration of -50.

Furthermore, in FIG. 6, the chassis 11 starts decelerating at the time t11 and stops at the time t13, which is 1 second after the time t11, but the mounting table 12 starts decelerating at the time t11 and stops at the time t14, which is 2 seconds after the time t11. Thus, when the mounting table 12 is decelerated as illustrated in FIG. 6 with respect to the chassis 11 that decelerates as illustrated in FIG. 6, the mounting table 12 moves by 50 cm with respect to the chassis 11 in the traveling direction (+ X direction) of the chassis 11 within 2 seconds during the times t11 to t14. That is, in FIG. 6, in order to halve the load applied to the transportation target CO placed on the mounting table 12 from the load with an acceleration of -100 to the load with an acceleration of - 50, the mounting table control unit 26 moves the mounting table 12 by 50 cm with respect to the chassis 11.

Countermeasure 1-3 (FIG. 7)

For example, as illustrated in FIG. 7, it is assumed that the chassis 11, which is moving toward the traveling direction at the chassis speed V1=100, starts decelerating at a chassis acceleration A1=-1,000 at time t21, continues to decelerate while keeping the chassis acceleration A1 constant at A1=-1,000 at time t22, and stops at time t23. Here, for example, it is assumed that the time t22 is 0.05 seconds after the time t21, the time t23 is 0.1 seconds after the time t21, and time t24 is 0.2 seconds after the time t21. Thus, the chassis speed V1 is V1=50 at the time t22 and V1=0 at the time t23.

With respect to the chassis 11 that decelerates toward the traveling direction in this way, the mounting table control unit 26 starts decelerating the mounting table 12, which is moving toward the traveling direction at the mounting table speed V2=100 (that is, the same speed as the chassis speed V1=100) at a mounting table acceleration A2=-500 at the time t21, and continuously decelerates the mounting table 12 while keeping the mounting table acceleration A2 constant at A2=-500 at the times t22 and t23. Thus, the mounting table speed V2 is V2=75 at the time t22, V2=50 at the time t23, and V2=0 at the time t24. Thus, at the time t24, the mounting table 12 is in a stopped state with respect to the chassis 11.

Here, for example, when the positional relation between the mounting table 12 and the chassis 11 is fixed in FIG. 7 (that is, when the mounting table 12 moves in the same manner as the chassis 11), a load with an acceleration of -1,000 is applied to the transportation target CO placed on the mounting table 12.

On the other hand, by changing the positional relation between the mounting table 12 and the chassis 11 as illustrated in FIG. 7, a load applied to the transportation target CO placed on the mounting table 12 can be suppressed to a load with an acceleration of -500.

Furthermore, in FIG. 7, the chassis 11 starts decelerating at the time t21 and stops at the time t23, which is 0.1 seconds after the time t21, but the mounting table 12 starts decelerating at the time t21 and stops at the time t24, which is 0.2 seconds after the time t21. Thus, when the mounting table 12 is decelerated as illustrated in FIG. 7 with respect to the chassis 11 that decelerates as illustrated in FIG. 7, the mounting table 12 moves by 5 cm with respect to the chassis 11 in the traveling direction (+ X direction) of the chassis 11 within 0.2 seconds during the times t21 to t24. That is, in FIG. 7, in order to halve the load applied to the transportation target CO placed on the mounting table 12 from the load with an acceleration of -1,000 to the load with an acceleration of -500, the mounting table control unit 26 needs only to move the mounting table 12 by 5 cm with respect to the chassis 11. As described above, in the countermeasure 1-3, in order to halve the load applied to the transportation target CO as in the countermeasure 1-2, the movement amount of the mounting table 12 with respect to the chassis 11 can be suppressed to 1/10 of that of the countermeasure 1-2. Thus, the countermeasure 1-3 is particularly useful for a case, where an obstacle suddenly occurs in the traveling direction of the transport robot 1 and the chassis 11 has to be stopped suddenly, and the like.

So far, the countermeasure 1 has been described.

Countermeasure 2 (FIGS. 8 and 9)

In the countermeasure 2, as illustrated in FIG. 8, when the chassis 11 is accelerated, the mounting table control unit 26 inclines the mounting table 12 such that a side surface S1 on the traveling direction side of the chassis 11 in a vertical direction ($\pm$Y direction) is lower than a side surface S2 on a side opposite to the traveling direction of the chassis 11. That is, when the chassis 11 is accelerated, the mounting table control unit 26 inclines the mounting table 12 in the same direction as the traveling direction of the chassis 11.

In a case where the mass of the transportation target CO is represented by m and a horizontal acceleration acting on the transportation target CO is represented by "a", when the chassis 11 is accelerated, the mounting table control unit 26 inclines the mounting table 12 with respect to the horizontal direction at an angle $\theta 1$ at which, for example, the relation of Formula (1) or Formula (2) is satisfied, so that it is possible to reduce a lateral load applied to the transportation target CO to 0 (zero). That is, when the chassis 11 is accelerated, the mounting table control unit 26 inclines the mounting table 12 in the same direction as the traveling direction of the chassis 11, so that the component force K1 of the inertial force F and the component force K2 of the gravity can be balanced on the transportation target CO placed on the mounting table 12. Thus, for example, when the chassis 11 is accelerated, the mounting table control unit 26 sets the angle $\theta 1$ to a larger value as the acceleration a in the same direction as the traveling direction of the chassis 11 is larger.

$$mg \times \sin\theta 1 = m \times a \times \cos\theta 1 \cdots (1)$$

$$a = g \times \sin\theta 1/\cos\theta 1 = g \times \tan\theta 1 \cdots (2)$$

Furthermore, as illustrated in FIG. 9, when the chassis 11 is decelerated, the mounting table control unit 26 inclines the mounting table 12 such that the side surface S2 is lower than the side surface S1 in the vertical direction ($\pm$Y direction). That is, when the chassis 11 is decelerated, the mounting table control unit 26 inclines the mounting table 12 in the direction opposite to the traveling direction of the chassis 11.

In a case where the mass of the transportation target CO is represented by m and the horizontal acceleration acting on the transportation target CO is represented by "a", when the chassis 11 is decelerated, the mounting table control unit 26 inclines the mounting table 12 with respect to the horizontal direction at an angle $\theta 2$ at which, for example, the relation of Formula (3) or Formula (4) is satisfied, so that it is possible to reduce the lateral load applied to the transportation target CO to 0 (zero). That is, when the chassis 11 is decelerated, the mounting table control unit 26 inclines the mounting table 12 in the direction opposite to the traveling direction of the chassis 11, so that the component force K1 of the inertial force F and the component force K2 of the gravity can be balanced on the transportation target CO placed on the mounting table 12. Thus, for example, when the chassis 11 is decelerated, the mounting table control unit 26 sets the angle $\theta 2$ to a larger value as the acceleration a in the direction opposite to the traveling direction of the chassis 11 is larger.

$$mg \times \sin\theta 2 = m \times a \times \cos\theta 2 \cdots (3)$$

$$a = g \times \sin\theta 2/\cos\theta 2 = g \times \tan\theta 2 \cdots (4)$$

For example, while the transport robot 1 is moving, preferably, the mounting table control unit 26 changes the angles θ1 and θ2 such that the mounting surface (that is, the upper surface of the mounting table 12) of the mounting table 12 on which the transportation target CO is placed is perpendicular to the direction of combined force obtained by combining the horizontal inertial force F (F=ma) acting on the transportation target CO and the gravity mg.

Here, from Formula (2) or Formula (4), it can be seen that the angles θ1 and θ2 increase as the absolute value of the acceleration a increases. On the other hand, there is a case where the absolute value of the acceleration a suddenly increases such as when an obstacle suddenly occurs in the traveling direction of the transport robot 1 and the chassis 11 has to be stopped suddenly. In this way, when the absolute value of the acceleration a suddenly increases, the mounting table control unit 26 suddenly increases the angles θ1 and θ2 in accordance with the sudden increase in the absolute value of the acceleration a, so that it is possible to suppress an increase in the lateral load applied to the transportation target CO. On the other hand, when the angles θ1 and θ2 suddenly increase, for example, if a transportation target placed on the mounting table 12 is food, the arrangement of the food is likely to collapse. Furthermore, since the angles θ1 and θ2 need to be increased or decreased appropriately in accordance with an acceleration, more precise timing control is required for a sudden increase/decrease. When timing shift occurs, a load may be applied to the transportation target CO placed on the mounting table 12.

In this regard, particularly, when the absolute value of the acceleration a suddenly increases, it is preferable to use the countermeasure 2 and the countermeasure 1 (particularly, the countermeasure 1-3) together in order to suppress an increment of the inclination angles θ1 and θ2 of the mounting table 12.

Furthermore, the operation determination unit 24 may determine the angles θ1 and θ2 that gently increase or decrease according to the acceleration or deceleration of the chassis 11, and determine the acceleration a that increases or decreases on the movement path thereof in accordance with an increase or decrease in the angles θ1 and θ2. For example, when the angle θ1 or the angle θ2 is increased from 0 (zero) at a constant angular velocity ω [rad/s], the operation determination unit 24 may determine the acceleration a according to Formula (5).

$$a = g \times \tan(\omega t) \quad \cdots \quad (5)$$

So far, the countermeasure 2 has been described.

Countermeasure 3

As described above, it is possible to reduce the lateral load on the transportation target CO to 0 (zero) by taking the countermeasure 2. However, a load applied to the transportation target CO downward in the direction perpendicular to the mounting surface of the mounting table 12 when taking the countermeasure 2 becomes larger than the load "m × g" applied to the transportation target CO when the transportation target CO is stopped or is moving at a constant velocity. For example, in the above example of FIG. 8, with respect to the transportation target CO, the sum force "m × g × cosθ1 + m × a × sinθ1" of the component force "m × g × cosθ1" acting vertically downward to the mounting surface of the mounting table 12 of the gravity mg and the component force "m × a × sinθ1" acting vertically downward to the mounting surface of the mounting table 12 of the inertial force F (=ma) is applied vertically downward to the mounting surface of the mounting table 12.

Here, since a is g × sinθ1/cosθ1 from m × g × sinθ1 + m × a × cosθ1, the aforementioned force "m × g × cosθ1 + m × a × sinθ1" is expressed by the following Formula (6)

$$m \times g \times \cos\theta1 + m \times a \times \sin\theta1 = m \times g \times \cos\theta1 + m \times (g \times \sin\theta1/\cos\theta1) \times \sin\theta1$$
$$= m \times g \times (\cos\theta1 + (\sin\theta1)^2/\cos\theta1)$$
$$= m \times g \times (\cos\theta1 + (1-\cos\theta1)^2/\cos\theta1)$$
$$= m \times g/\cos\theta1 \quad \cdots \quad (6)$$

That is, when the countermeasure 2 is taken, with respect to the transportation target CO, a load of "1/cosθ1" times m × g is applied downward in the direction perpendicular to the mounting surface of the mounting table 12 of the gravity mg. For example, when the angle θ1 takes a value of 0° to 90°, "1/cosθ1" becomes 1 to ∞. Furthermore, in the countermeasure 2, as the acceleration a increases, the angle θ1 increases, resulting in an increase in "1/cosθ1".

In this regard, in the countermeasure 3, as the chassis 11 is accelerated or decelerated, the mounting table control unit 26 inclines the mounting table 12 according to the countermeasure 2, and simultaneously moves the mounting table 12 in the direction perpendicular to the mounting surface thereof. For example, when the chassis 11 is accelerated or decelerated, the mounting table control unit 26 inclines the mounting table 12 according to the countermeasure 2, and simultaneously accelerates the mounting table 12 downward in the direction perpendicular to the mounting surface thereof.

So far, the first embodiment has been described.

Second embodiment

Operation of transport robot

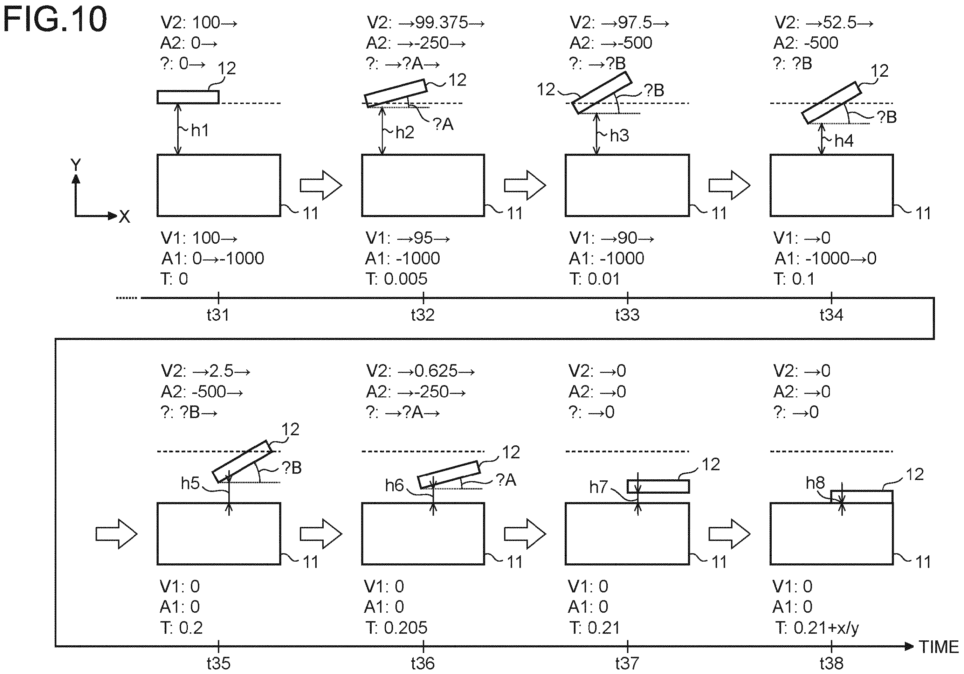

FIG. 10 is a diagram provided for explaining an operation example of the transport robot of the second embodiment. In the second embodiment, the countermeasures 1, 2, and 3 are used together.

For example, as illustrated in FIG. 10, it is assumed that the chassis 11, which is moving toward the traveling direction (X direction in the drawing) at the chassis speed V1=100, starts decelerating at the chassis acceleration A1=-1,000 at time t31, and stops at time t34. Here, for example, it is assumed that time t32 is 0.005 seconds after the time t31 (T=0.005), time t33 is 0.01 seconds after the time t31 (T=0.01), the time t34 is 0.1 seconds after the time t31 (T=0.1), time t35 is 0.2 seconds after the time t31 (T=0.2), time t36 is 0.205 seconds after the time t31 (T=0.205), and time t37 is 0.21 seconds after the time t31 (T=0.21).

With respect to the chassis 11 that decelerates toward the traveling direction in this way, the mounting table control unit 26 accelerates the mounting table 12, which is moving toward the traveling direction at the mounting table speed V2=100 (that is, the same speed as the chassis speed V1=100) to an acceleration (A2=-250) corresponding to half the chassis acceleration A1 at the time t33 by gradually increasing the mounting table acceleration A2 from the time t31. For simplification of description, it is assumed that the mounting table control unit 26 linearly increases the mounting table acceleration A2 during the time t31 to the time t33. In such a case, at the time t32, the mounting table acceleration A2 is -250 and the mounting table speed V2 is 99.375. Furthermore, at the time t33, the mounting table acceleration A2 is -500 and the mounting table speed V2 is 97.5.

Next, the mounting table control unit 26 decelerates the mounting table 12 at a constant mounting table acceleration A2=-500 during the time t33 to the time t35. In such a case, at the time t34 when the chassis 11 has stopped, the mounting table speed V2 of the mounting table 12 is 52.5, and at the time t35, the mounting table speed V2 is 2.5.

Next, the mounting table control unit 26 gradually decreases the mounting table acceleration A2 of the mounting table 12, thereby setting the mounting table acceleration V2 to 0 in accordance with the stop of the mounting table 12 at the time t37. For simplification of description, it is assumed that the mounting table control unit 26 linearly decreases the mounting table acceleration A2 during the time t35 to the time t37. In such a case, at the time t36, the mounting table acceleration A2 is -250 and the mounting table speed V2 is 0.625.

Furthermore, during the times t31 to t33, the mounting table control unit 26 gradually increases the inclination of the mounting table 12 with respect to the direction opposite to the traveling direction of the chassis 11 in accordance with an increase in the mounting table acceleration A2. In such a case, when it is assumed that the angle $\theta$ of the mounting table 12 at the time t32 is $\theta$A, the angle $\theta$ of the mounting table 12 at the time t33 is an angle $\theta$B larger than $\theta$A.

Next, the mounting table control unit 26 keeps the angle $\theta$ at $\theta$B during the times t33 to t35 for which the mounting table acceleration A2 is constant, and then gradually decreases the angle $\theta$ during the times t35 to t37 in accordance with a decrease in the mounting table acceleration A2, thereby allowing the mounting table 12 to be horizontal ($\theta$=0) at the time t37. In such a case, the angle $\theta$ of the mounting table 12 at the time t36 is $\theta$A.

Moreover, the mounting table control unit 26 accelerates the mounting table 12 downward in the direction perpendicular to the mounting surface thereof from the time t31 when the mounting table 12 is started to decelerate to the time t37 when the mounting table 12 is stopped. Specifically, during the times t31 to t33 for which the mounting table acceleration A2 is gradually increased, the mounting table control unit 26 gives the mounting table 12 an acceleration (mounting table acceleration A2') acting vertically downward to the mounting surface thereof while gradually increasing the acceleration. Next, the mounting table control unit 26 keeps the mounting table acceleration A2' constant during the times t33 to t35 for which the mounting table acceleration A2 is constant. Next, the mounting table control unit 26 decreases the mounting table acceleration A2' with respect to the mounting table 12 during the times t35 to t37 for which the mounting table acceleration A2 is gradually decreased, and then sets the mounting table acceleration A2 to 0 at the time t37 when the mounting table 12 is stopped in the horizontal direction. With this, a height h of the mounting table 12 with respect to the chassis 11 is gradually decreased from a height h1 at the time t31 (h=h1→h2→h3→h4→h5→h6), and reaches, for example, a predetermined height h7 from the chassis 11 at the time t37. The vertical downward speed (mounting table acceleration V2') at this time is defined as x.

Thereafter, during the times t37 and t38 for which the movement of the mounting table 12 in the horizontal direction is stopped and the mounting table 12 is parallel to the horizontal direction, the mounting table control unit 26 gives the mounting table 12 the mounting table acceleration A2'=y upward in the vertical direction. With this, at time t38, which is "0.21+(x/y)" seconds after the time t31, the mounting table 12 is completely stopped with respect to the chassis 11. At this time, a height h8 of the mounting table 12 with respect to the chassis 12 may be, for example, 0.

So far, the second embodiment has been described.

Third embodiment

Operation of transport robot

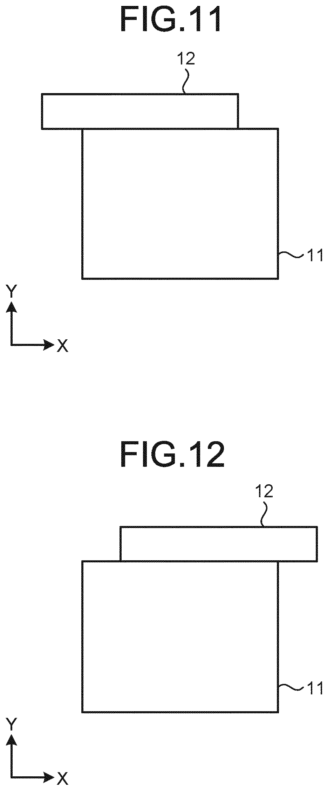

FIGS. 11 and 12 are diagrams provided for explaining an operation example of the transport robot of the third embodiment.

In the first and second embodiments, the case where the mounting table 12 is moved within the range of the lateral width of the chassis 11 has been described as an example (FIGS. 5, 6, 7, and 10). However, the movement range of the mounting table 12 is not limited to the range of the lateral width of the chassis 11, and as illustrated in FIG. 11 and FIG. 12, the mounting table control unit 26 may move the mounting table 12 beyond the lateral width of the chassis 11.

So far, the third embodiment has been described.

Fourth embodiment

Configuration of transport robot

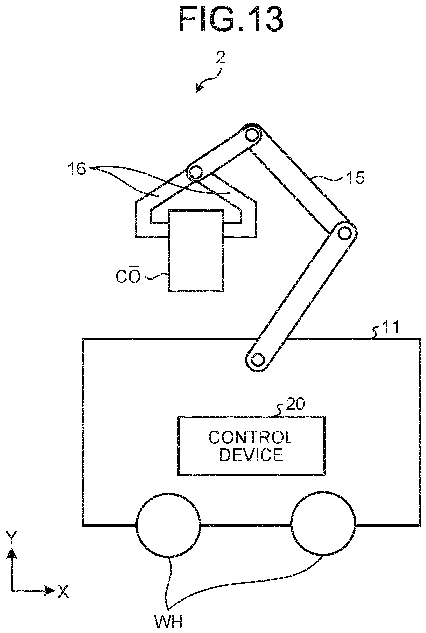

FIG. 13 is a diagram illustrating a configuration example of a transport robot of the fourth embodiment. In FIG. 4, a transport robot 2 has a chassis 11, a hand 16, a connecting arm 15, and a control device 20. Note that, as in the first embodiment, instead of the chassis 11, various movable configurations can also be used as a moving unit of the transport robot 2. Since the chassis 11 and the hand 16 are connected by the connecting arm 15 that is bendable and extendable, the chassis 11 and the hand 16 can operate independently of each other. The hand 16 grips the transportation target CO. The transportation target CO gripped by the hand 16 connected to the chassis 11 via the connecting arm 15 is transported along with the movement of the chassis 11 while being gripped by the hand 16. The hand 16 is an example of a "transporting unit" that comes into contact with the transportation target CO and transports the transportation target CO.

As described above, the transport robot 2 of the fourth embodiment has the hand 16 instead of the mounting table 12 provided in the transport robot 1 (FIG. 1) of the first embodiment. Therefore, the control device 20 of the fourth embodiment has a "hand control unit" instead of the "mounting table control unit 26" in FIG. 2. Furthermore, in the fourth embodiment, the hand control unit performs the same control on the hand 16 as the control performed on the mounting table 12 by the mounting table control unit 26 in the first to third embodiments.

So far, the fourth embodiment has been described.

Fifth embodiment

Operation of transport robot

The technology of the disclosure can be applied not only when the transport robots 1 and 2 start moving from a stopped state and when the transport robots 1 and 2 stop moving, but also at any point on the movement paths thereof.

Furthermore, the technology of the disclosure can also be applied not only when the transport robots 1 and 2 move straight, but also when they simultaneously perform deceleration and acceleration in different directions when turning.

Furthermore, even when the transport robots 1 and 2 move in an arc when turning, the technology of the disclosure can be applied in accordance with the inertial force acting at that time.

So far, the fifth embodiment has been described.

Effect of technology of disclosure

As described above, according to the technology of the disclosure, in the control device 20 provided in the transport robot 1, the chassis control unit 25 controls the movement speed of the chassis 11. The mounting table control unit 26 moves the mounting table 12 with respect to the chassis 11 according to the acceleration or deceleration of the chassis 11. For example, when the chassis 11 is accelerated, the mounting table control unit 26 accelerates the mounting table 12 in the same direction as the traveling direction of the chassis 11 (FIG. 5), and when the chassis 11 is decelerated, the mounting table control unit 26 accelerates the mounting table 12 in the direction opposite to the traveling direction of the chassis 11 (FIGS. 6 and 7). By so doing, it is possible to reduce a load applied to the transportation target CO placed on the mounting table 12 due to the movement of the transport robot 1, so that it is possible to safely transport the transportation target CO. Particularly, it is possible to transport the transportation target CO that is susceptible to collapse, such as food served on a plate, without collapsing the transportation target CO.

Furthermore, the mounting table control unit 26 accelerates or decelerates the mounting table 12 at the acceleration with an absolute value |A2| (|A2|=50 in FIG. 5, |A2|=50 in FIG. 6, and |A2|=500 in FIG. 7) smaller than the absolute value |A1| (|A1|=100 in FIG. 5, |A1|=100 in FIG. 6, and |A1|=1,000 in FIG. 7) of the acceleration given to the chassis 11 by the chassis control unit 25. By so doing, the relative acceleration of the mounting table 12 with respect to the chassis 11 can be set to an appropriate acceleration in reducing a load applied to the transportation target CO placed on the mounting table 12.

Furthermore, the mounting table control unit 26 starts accelerating the mounting table 12 before the chassis control unit 25 starts accelerating the chassis 11 (FIG. 5). By so doing, it is possible to reduce a load applied to the transportation target CO when the movement of the stopped chassis 11 is started.

Furthermore, the mounting table control unit 26 controls the movement of the mounting table 12 such that the mounting table 12 is stopped with respect to the chassis 11 when the chassis control unit 25 stops accelerating or decelerating the chassis 11 (FIGS. 5, 6, and 7). By so doing, it is possible to reduce a load applied to the transportation target CO when the movement speed of the stopped chassis 11 becomes a constant speed, and to prevent the mounting table 12 from trying to move beyond the movable range of the connecting arm 13 with respect to the chassis 11.

Furthermore, the mounting table control unit 26 changes the angle of the mounting table 12 with respect to the horizontal direction according to the acceleration or deceleration of the chassis 11. For example, when the chassis 11 is accelerated, the mounting table control unit 26 inclines the mounting table 12 in the same direction as the traveling direction of the chassis 11 (FIG. 8), and when the chassis 11 is decelerated, the mounting table control unit 26 inclines the mounting table 12 in the direction opposite to the traveling direction of the chassis 11 (FIG. 9). By so doing, it is possible to further reduce a load applied to the transportation target CO.

Furthermore, the mounting table control unit 26 changes the angle of the mounting table 12 with respect to the horizontal direction such that the direction parallel to the mounting surface of the mounting table 12 is parallel to the direction of a combined acceleration obtained by combining a horizontal acceleration acting on the transportation target CO and the gravitational acceleration. By so doing, the angle of the mounting table 12 with respect to the horizontal direction can be controlled to an angle at which a load applied to the transportation target CO can be minimized.

Furthermore, the mounting table control unit 26 moves the mounting table 12 in the direction perpendicular to the mounting surface thereof according to the acceleration or deceleration of the chassis 11. For example, when the chassis 11 is accelerated or decelerated, the mounting table control unit 26 accelerates the mounting table 12 downward in the direction perpendicular to the mounting surface thereof. By so doing, it is possible to further reduce a load applied to the transportation target CO.

Furthermore, on the basis of the characteristics of the transportation target CO, the operation determination unit 24 determines the movement speed or acceleration of the chassis 11 on the movement path thereof before the chassis 11 starts moving. By so doing, it is possible to transport the transportation target CO at an appropriate movement speed or acceleration based on the characteristics of the transportation target CO.

Furthermore, the characteristic judgment unit 22 judges the characteristics of the transportation target CO by applying a load to the transportation target CO before the chassis 11 starts moving. By so doing, it is possible to accurately judge the characteristics of the transportation target CO.

Note that the technology of the disclosure can also take the following configurations.

(1)
A control device that controls movement of a transporting unit connected to a moving unit that is movable, the control device comprising:

> a first control unit that controls a movement speed of the moving unit; and
> a second control unit that moves the transporting unit with respect to the moving unit according to acceleration or deceleration of the moving unit.

(2) The control device according to (1), wherein
the second control unit gives the transporting unit an acceleration in a direction opposite to a direction of an acceleration given by the first control unit to the moving unit.

(3) The control device according to (1) or (2), wherein
the second control unit accelerates or decelerates the transporting unit at an acceleration with an absolute value smaller than an absolute value of the acceleration given by the first control unit to the moving unit.

(4) The control device according to any one of (1) to (3), wherein
the second control unit starts accelerating the transporting unit before the first control unit starts accelerating the moving unit.

(5) The control device according to (4), wherein
the second control unit controls the movement of the transporting unit such that the transporting unit is in a stopped state with respect to the moving unit when the first control unit stops accelerating or decelerating the moving unit.

(6) The control device according to any one of (1) to (5), wherein
the second control unit decelerates the transporting unit even when the first control unit finishes decelerating the moving unit.

(7) The control device according to any one of (1) to (6), wherein
the second control unit changes an angle of the transporting unit with respect to a horizontal direction according to the acceleration or deceleration of the moving unit.

(8) The control device according to (7), wherein
the second control unit inclines the transporting unit in a direction in the same direction as a traveling direction of the moving unit when the moving unit is accelerated, and inclines the transporting unit in a direction opposite to the traveling direction when the moving unit is decelerated.

(9) The control device according to (7) or (8), wherein
the second control unit changes the angle of the transporting unit such that a mounting surface of the transporting unit on which a transportation target is placed is perpendicular to a direction of combined force obtained by combining horizontal inertial force acting on the transportation target and gravity.

(10) The control device according to any one of (1) to (9), wherein
the second control unit moves the transporting unit in a direction perpendicular to a mounting surface of the transporting unit according to the acceleration or deceleration of the moving unit.

(11) The control device according to (10), wherein
the second control unit accelerates the transporting unit downward in a direction perpendicular to the mounting surface of the transporting unit when the moving unit is accelerated or decelerated.

(12) The control device according to any one of (1) to (11), further comprising:

   a judgment unit that judges characteristics of a transportation target that is transported with the transporting unit; and
   a determination unit that determines the movement speed or an acceleration of the moving unit on a movement path thereof on the basis of the characteristics before the moving unit starts moving.

(13) The control device according to (12), wherein
the judgment unit judges the characteristics by applying a load to the transportation target with the transporting unit before the moving unit starts moving.

(14) The control device according to (13), wherein
the load includes at least one of acceleration, deceleration, and vibration of the transportation target.

(15) A control method that controls movement of a transporting unit connected to a moving unit that is movable, the control method comprising:
moving the transporting unit with respect to the moving unit according to acceleration or deceleration of the moving unit.

(16) A computer program, which controls movement of a transporting unit connected to a moving unit that is movable, causing a control device to perform a process of:
moving the transporting unit with respect to the moving unit according to acceleration or deceleration of the moving unit.

Reference Signs List

| 1, 2 | TRANSPORT ROBOT |
| 11 | CHASSIS |
| 12 | MOUNTING TABLE |
| 13, 15 | CONNECTING ARM |
| 16 | HAND |
| 20 | CONTROL DEVICE |
| 21 | TRANSPORTATION TARGET SENSOR |
| 22 | CHARACTERISTIC JUDGMENT UNIT |
| 23 | EXTERNAL CONDITION SENSOR |

24      OPERATION DETERMINATION UNIT
25      CHASSIS CONTROL UNIT
26      MOUNTING TABLE CONTROL UNIT
27      STORAGE UNIT

**Claims**

**1.** A control device (20) that controls movement of a transporting unit connected to a moving unit that is movable, the control device (20) comprising:

    a first control unit that is configured to control a movement speed of the moving unit; and
    a second control unit that is configured to move the transporting unit with respect to the moving unit according to acceleration or deceleration of the moving unit,
    the control device (20) further comprising:

        a judgment unit (22) that is configured to judge characteristics of a transportation target (CO) that is transported with the transporting unit; and
        a determination unit (24) that is configured to determinate the movement speed or an acceleration of the moving unit on a movement path thereof on the basis of the characteristics before the moving unit starts moving.

**2.** The control device (20) according to claim 1, wherein
the second control unit is configured to give the transporting unit an acceleration in a direction opposite to a direction of an acceleration given by the first control unit to the moving unit.

**3.** The control device (20) according to claim 1, wherein
the second control unit is configured to accelerate or decelerate the transporting unit at an acceleration with an absolute value smaller than an absolute value of the acceleration given by the first control unit to the moving unit.

**4.** The control device (20) according to claim 1, wherein
the second control unit is configured to start accelerating the transporting unit before the first control unit starts accelerating the moving unit.

**5.** The control device (20) according to claim 4, wherein
the second control unit is configured to control the movement of the transporting unit such that the transporting unit is in a stopped state with respect to the moving unit when the first control unit stops accelerating or decelerating the moving unit.

**6.** The control device (20) according to claim 1, wherein
the second control unit is configured to decelerate the transporting unit even when the first control unit finishes decelerating the moving unit.

**7.** The control device (20) according to claim 1, wherein
the second control unit is configured to change an angle of the transporting unit with respect to a horizontal direction according to the acceleration or deceleration of the moving unit.

**8.** The control device (20) according to claim 7, wherein

    the second control unit is configured to incline the transporting unit in a direction in the same direction as a traveling direction of the moving unit when the moving unit is accelerated, and is configured to incline the transporting unit in a direction opposite to the traveling direction when the moving unit is decelerated; or
    the second control unit is configured to change the angle of the transporting unit such that a mounting surface of the transporting unit on which the transportation target (CO) is placed is perpendicular to a direction of combined force obtained by combining horizontal inertial force acting on the transportation target (CO) and gravity.

**9.** The control device (20) according to claim 7, wherein

the second control unit is configured to move the transporting unit in a direction perpendicular to a mounting surface of the transporting unit according to the acceleration or deceleration of the moving unit.

10. The control device (20) according to claim 9, wherein
the second control unit is configured to accelerate the transporting unit downward in a direction perpendicular to the mounting surface of the transporting unit when the moving unit is accelerated or decelerated.

11. The control device (20) according to any one of the preceding claims, wherein
the judgment unit (22) is configured to judge the characteristics by applying a load to the transportation target (CO) with the transporting unit before the moving unit starts moving.

12. The control device (20) according to claim 12, wherein
the load includes at least one of acceleration, deceleration, and vibration of the transportation target.

13. A control method that controls movement of a transporting unit connected to a moving unit that is movable, the control method comprising:

moving the transporting unit with respect to the moving unit according to acceleration or deceleration of the moving unit,
judging characteristics of a transportation target (CO) that is transported with the transporting unit; and
determining a movement speed or an acceleration of the moving unit on a movement path thereof on the basis of the characteristics before the moving unit starts moving.

14. A computer program, which controls movement of a transporting unit connected to a moving unit that is movable, causing a control device (20) to perform a control method according to claim 13.

**Patentansprüche**

1. Steuervorrichtung (20), die die Bewegung einer Transporteinheit steuert, die mit einer beweglichen Bewegungseinheit verbunden ist, wobei die Steuervorrichtung (20) umfasst:

eine erste Steuereinheit, die dazu konfiguriert ist, eine Bewegungsgeschwindigkeit der Bewegungseinheit zu steuern; und
eine zweite Steuereinheit, die dazu konfiguriert ist, die Transporteinheit in Bezug auf die Bewegungseinheit entsprechend einer Beschleunigung oder Verzögerung der Bewegungseinheit zu bewegen,
wobei die Steuervorrichtung (20) ferner umfasst:

eine Beurteilungseinheit (22), die dazu konfiguriert ist, Eigenschaften eines Transportziels (CO) zu beurteilen, das mit der Transporteinheit transportiert wird; und
eine Bestimmungseinheit (24), die dazu konfiguriert ist, die Bewegungsgeschwindigkeit oder eine Beschleunigung der Bewegungseinheit auf einem Bewegungspfad davon auf der Grundlage der Eigenschaften zu bestimmen, bevor die Bewegungseinheit beginnt, sich zu bewegen.

2. Steuervorrichtung (20) nach Anspruch 1, wobei
die zweite Steuervorrichtung dazu konfiguriert ist, der Transporteinheit eine Beschleunigung in eine Richtung zu verleihen, die der Richtung einer von der ersten Steuereinheit der Bewegungseinheit verliehenen Beschleunigung entgegengesetzt ist.

3. Steuervorrichtung (20) nach Anspruch 1, wobei
die zweite Steuervorrichtung dazu konfiguriert ist, die Transporteinheit mit einer Beschleunigung zu beschleunigen oder abzubremsen, deren Absolutwert kleiner ist als der Absolutwert der von der ersten Steuereinheit an die Bewegungseinheit abgegebenen Beschleunigung.

4. Steuervorrichtung (20) nach Anspruch 1, wobei
die zweite Steuereinheit dazu konfiguriert ist, mit der Beschleunigung der Transporteinheit zu beginnen, bevor die erste Steuereinheit mit der Beschleunigung der Bewegungseinheit beginnt.

16

**5.** Steuervorrichtung (20) nach Anspruch 4, wobei
die zweite Steuereinheit dazu konfiguriert ist, die Bewegung der Transporteinheit so zu steuern, dass sich die Transporteinheit in einem angehaltenen Zustand in Bezug auf die Bewegungseinheit befindet, wenn die erste Steuereinheit aufhört, die Bewegungseinheit zu beschleunigen oder abzubremsen.

**6.** Steuervorrichtung (20) nach Anspruch 1, wobei
die zweite Steuereinheit dazu konfiguriert ist, die Transporteinheit auch dann abzubremsen, wenn die erste Steuereinheit das Abbremsen der Bewegungseinheit beendet.

**7.** Steuervorrichtung (20) nach Anspruch 1, wobei
die zweite Steuereinheit dazu konfiguriert ist, einen Winkel der Transporteinheit in Bezug auf eine horizontale Richtung entsprechend der Beschleunigung oder Verzögerung der Bewegungseinheit zu ändern.

**8.** Steuervorrichtung (20) nach Anspruch 7, wobei

die zweite Steuereinheit dazu konfiguriert ist, die Transporteinheit in eine Richtung zu neigen, die in die gleiche Richtung wie die Fahrtrichtung der Bewegungseinheit verläuft, wenn die Bewegungseinheit beschleunigt wird, und dazu konfiguriert ist, die Transporteinheit in eine Richtung zu neigen, die der Fahrtrichtung entgegengesetzt ist, wenn die Bewegungseinheit abgebremst wird; oder
die zweite Steuereinheit dazu konfiguriert ist, den Winkel der Transporteinheit so zu ändern, dass eine Montagefläche der Transporteinheit, auf der das Transportziel (CO) platziert ist, senkrecht zu einer Richtung einer kombinierten Kraft steht, die durch die Kombination der auf das Transportziel (CO) wirkenden horizontalen Trägheitskraft und der Schwerkraft erhalten wird.

**9.** Steuervorrichtung (20) nach Anspruch 7, wobei
die zweite Steuereinheit dazu konfiguriert ist, die Transporteinheit entsprechend der Beschleunigung oder Verzögerung der Bewegungseinheit in einer Richtung senkrecht zu einer Montagefläche der Transporteinheit zu bewegen.

**10.** Steuervorrichtung (20) nach Anspruch 9, wobei
die zweite Steuereinheit dazu konfiguriert ist, die Transporteinheit in einer Richtung senkrecht zur Montagefläche der Transporteinheit nach unten zu beschleunigen, wenn die Bewegungseinheit beschleunigt oder verzögert wird.

**11.** Steuervorrichtung (20) nach einem der vorstehenden Ansprüche, wobei
die Beurteilungseinheit (22) dazu konfiguriert ist, die Eigenschaften dadurch zu beurteilen, dass sie mit der Transporteinheit eine Last auf das Transportziel (CO) aufbringt, bevor die Bewegungseinheit mit der Bewegung beginnt.

**12.** Steuervorrichtung (20) nach Anspruch 12, wobei
die Last mindestens eine der Eigenschaften Beschleunigung, Verzögerung und Vibration des Transportziels einschließt.

**13.** Steuerverfahren, das die Bewegung einer Transporteinheit steuert, die mit einer beweglichen Bewegungseinheit verbunden ist, wobei das Steuerverfahren umfasst:

Bewegen der Transporteinheit in Bezug auf die Bewegungseinheit entsprechend der Beschleunigung oder Verzögerung der Bewegungseinheit,
Beurteilen von Eigenschaften eines Transportziels (CO), das mit der Transporteinheit transportiert wird; und
Bestimmen einer Bewegungsgeschwindigkeit oder einer Beschleunigung der Bewegungseinheit auf einem Bewegungspfad davon auf der Grundlage der Eigenschaften, bevor die Bewegungseinheit mit der Bewegung beginnt.

**14.** Computerprogramm, das die Bewegung einer Transporteinheit steuert, die mit einer beweglichen Bewegungseinheit verbunden ist, und das eine Steuervorrichtung (20) veranlasst, ein Steuerverfahren nach Anspruch 13 auszuführen.

## Revendications

**1.** Dispositif de commande (20) qui commande un déplacement d'une unité de transport connectée à une unité mobile qui peut être déplacée, le dispositif de commande (20) comprenant :

une première unité de commande configurée pour commander une vitesse de déplacement de l'unité mobile ; et
une seconde unité de commande configurée pour déplacer l'unité de transport par rapport à l'unité mobile selon une accélération ou une décélération de l'unité mobile,
le dispositif de commande (20) comprenant en outre :

une unité d'évaluation (22) configurée pour évaluer des caractéristiques d'une cible de transport (CO) transportée par l'unité de transport ; et
une unité de détermination (24) configurée pour déterminer la vitesse de déplacement ou une accélération de l'unité mobile sur son trajet de déplacement sur la base des caractéristiques avant que l'unité mobile ne commence à se déplacer.

2. Dispositif de commande (20) selon la revendication 1, dans lequel
la seconde unité de commande est configurée pour donner à l'unité de transport une accélération dans une direction opposée à une direction d'une accélération donnée par la première unité de commande à l'unité de mobile.

3. Dispositif de commande (20) selon la revendication 1, dans lequel
la seconde unité de commande est configurée pour accélérer ou décélérer l'unité de transport à une accélération dont une valeur absolue est inférieure à une valeur absolue de l'accélération donnée par la première unité de commande à l'unité mobile.

4. Dispositif de commande (20) selon la revendication 1, dans lequel
la seconde unité de commande est configurée pour commencer à accélérer l'unité de transport avant que la première unité de commande ne commence à accélérer l'unité mobile.

5. Dispositif de commande (20) selon la revendication 4, dans lequel
la seconde unité de commande est configurée pour commander le déplacement de l'unité de transport de telle sorte que l'unité de transport est à l'état d'arrêt par rapport à l'unité mobile lorsque la première unité de commande cesse d'accélérer ou de décélérer l'unité mobile.

6. Dispositif de commande (20) selon la revendication 1, dans lequel
la seconde unité de commande est configurée pour décélérer l'unité de transport même lorsque la première unité de commande finit de décélérer l'unité mobile.

7. Dispositif de commande (20) selon la revendication 1, dans lequel
la seconde unité de commande est configurée pour modifier un angle de l'unité de transport par rapport à une direction horizontale selon l'accélération ou la décélération de l'unité mobile.

8. Dispositif de commande (20) selon la revendication 7, dans lequel

la seconde unité de commande est configurée pour incliner l'unité de transport dans une direction identique à une direction de marche de l'unité mobile lorsque l'unité mobile est accélérée, et est configurée pour incliner l'unité de transport dans une direction opposée à la direction de marche lorsque l'unité mobile est décélérée ; ou la seconde unité de commande est configurée pour modifier l'angle de l'unité de transport de telle sorte qu'une surface de montage de l'unité de transport sur laquelle la cible de transport (CO) est placée est perpendiculaire à une direction de force combinée obtenue en combinant une force d'inertie horizontale agissant sur la cible de transport (CO) et la gravité.

9. Dispositif de commande (20) selon la revendication 7, dans lequel
la seconde unité de commande est configurée pour déplacer l'unité de transport dans une direction perpendiculaire à une surface de montage de l'unité de transport selon l'accélération ou la décélération de l'unité de déplacement.

10. Dispositif de commande (20) selon la revendication 9, dans lequel
la seconde unité de commande est configurée pour accélérer l'unité de transport vers le bas dans une direction perpendiculaire à la surface de montage de l'unité de transport lorsque l'unité mobile est accélérée ou décélérée.

11. Dispositif de commande (20) selon l'une quelconque des revendications précédentes, dans lequel
l'unité d'évaluation (22) est configurée pour évaluer les caractéristiques en appliquant une charge à la cible de transport (CO) avec l'unité de transport avant que l'unité de déplacement ne commence à se déplacer.

**12.** Dispositif de commande (20) selon la revendication 12, dans lequel
la charge comporte au moins l'une parmi une accélération, une décélération et une vibration de la cible de transport.

**13.** Procédé de commande qui commande un déplacement d'une unité de transport connectée à une unité mobile qui peut être déplacée, le procédé de commande comprenant :

le déplacement de l'unité de transport par rapport à l'unité mobile selon une accélération ou une décélération de l'unité mobile,
l'évaluation de caractéristiques d'une cible de transport (CO) qui est transportée avec l'unité de transport ; et
la détermination d'une vitesse de déplacement ou d'une accélération de l'unité mobile sur son trajet de déplacement sur la base des caractéristiques avant que l'unité mobile ne commence à se déplacer.

**14.** Programme d'ordinateur qui commande le déplacement d'une unité de transport connectée à une unité mobile qui peut être déplacée, amenant un dispositif de commande (20) à réaliser un procédé de commande selon la revendication 13.

# FIG.1

# FIG.2

20

| 22 CHARACTERISTIC JUDGMENT UNIT | 21 TRANSPORTATION TARGET SENSOR |
|---|---|

23 EXTERNAL CONDITION SENSOR

| 26 MOUNTING TABLE CONTROL UNIT | 24 OPERATION DETERMINATION UNIT | 25 CHASSIS CONTROL UNIT |
|---|---|---|

27 STORAGE UNIT

# FIG.3

CŌ

SURFACE
DRAG N

12

GRAVITY mg

11

Y

X

# FIG.4

CŌ

INERTIAL FORCE F (=ma)

SURFACE
DRAG N

FRICTION FORCE f

12

GRAVITY mg

11

Y

X

# FIG.5

**t0:**
V2: 0
→ A2: 50
~12
~11
V1: 0
A1: 0

Y → X

**t1:**
→ V2: 50
→ A2: 50
~12
~11
V1: 0
→ A1: 100
TRAVELING DIRECTION →

**t2:**
→ V2: 75
→ A2: 50
~12
~11
→ V1: 50
→ A1: 100
TRAVELING DIRECTION →

**t3:**
→ V2: 100
A2: 0
~12
~11
→ V1: 100
A1: 0
TRAVELING DIRECTION →

TIME →

t0    t1    t2    t3

EP 3 862 149 B1

FIG.6

# FIG.7

V2: 100
A2: -500
~12

V2: 75
A2: -500
~12

V2: 50
A2: -500
~12

V2: 0
A2: 0
~12

~11

~11

~11

~11

V1: 100
A1: -1000

V1: 50
A1: -1000

V1: 0
A1: 0

V1: 0
A1: 0

Y

X

TRAVELING
DIRECTION

TRAVELING
DIRECTION

... 

t21

t22

t23

t24

TIME

# FIG.8

# FIG.9

FIG.10

V2: 100→
A2: 0→
?: 0→ 12

~h1

~11

V1: 100→
A1: 0→-1000
T: 0

t31

V2: →99.375→
A2: →-250→
?: →?A→ 12

?A

~h2

~11

V1: →95→
A1: -1000
T: 0.005

t32

V2: →97.5→
A2: →-500
?: →?B

12 ?B

~h3

~11

V1: →90→
A1: -1000
T: 0.01

t33

V2: →52.5→
A2: -500
?: ?B

12

?B

~h4

~11

V1: →0
A1: -1000→0
T: 0.1

t34

V2: →2.5→
A2: -500→
?: ?B→

12

?B

h5

~11

V1: 0
A1: 0
T: 0.2

t35

V2: →0.625→
A2: →-250→
?: →?A→

12

h6 ?A

~11

V1: 0
A1: 0
T: 0.205

t36

V2: →0
A2: →0
?: →0

12

h7

~11

V1: 0
A1: 0
T: 0.21

t37

V2: →0
A2: →0
?: →0

12

h8

~11

V1: 0
A1: 0
T: 0.21+x/y

t38

TIME

EP 3 862 149 B1

28

# FIG.11

12

11

Y

X

# FIG.12

12

11

Y

X

# FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016034685 A
- JP 2005001055 A
- JP 2007195750 A
- JP 2012162195 A

**Non-patent literature cited in the description**

- Active acceleration compensation using a Stewart-platform on a mobile robot. **GRAF R et al.** ADVANCED MOBILE ROBOTS, 1997, PROCEEDINGS, SECOND EUROMICRO WORKSHOP ON BRESCIA. IEEE COMPUT. SOC, 22 October 1997, 59-64